# EUROPÄISCHE PATENTSCHRIFT

(11) **EP 1 427 281 B1**
(45) Veröffentlichungstag und Bekanntmachung des Hinweises auf die Patenterteilung: **21.11.2007**
(21) Anmeldenummer: 02764874.0
(22) Anmeldetag: 06.09.2002
(51) Int. Cl.: A01N 25/32, A01N 43/80

(54) **KOMBINATIONEN AUS HERBIZIDEN UND SAFENERN**
HERBICIDE AND SAFENING COMBINATIONS
COMBINAISONS D'HERBICIDES ET DE PHYTOPROTECTEURS

(30) Priorität: 13.09.2001 DE 10145019
(43) Veröffentlichungstag der Anmeldung: 16.06.2004
(73) Patentinhaber: Bayer CropScience AG, 40789 Monheim (DE)
(72) Erfinder: ZIEMER, Frank, 65830 Kriftel (DE); WILLMS, Lothar, 65719 Hofheim (DE); ROSINGER, Christopher, 65719 Hofheim (DE); BIERINGER, Hermann, 65817 Eppstein (DE); HACKER, Erwin, 65239 Hochheim (DE)
(86) Internationale Anmeldenummer: PCT/EP2002/009973
(87) Internationale Veröffentlichungsnummer: WO 2003/022050

(56) Entgegenhaltungen:
- WO-A-00/00031
- WO-A-97/34485
- WO-A-99/16744
- WO-A-99/66795

## Beschreibung

Die Erfindung betrifft das technische Gebiet der Pflanzenschutzmittel, insbesondere Herbizid-Antidot-Kombinationen (Wirkstoff-Safener-Kombinationen), die hervorragend für den Einsatz gegen konkurrierende Schadpflanzen in Nutzpflanzenkulturen geeignet sind.

Kombinationen von Herbiziden aus der Gruppe der Inhibitoren der Hydroxyphenylpyruvat-Dioxygenase (HPPD), dazu gehören beispielsweise Benzoylcyclohexandione, Benzoylpyrazole und Benzoylisoxazole, mit Safenern sind grundsätzlich bekannt. So sind in WO 00/30447 WO 0/00031 und in WO 01/17350 jeweils Kombinationen zahlreicher Herbizide aus der Gruppe der HPPD-Inhibitoren mit einer Vielzahl von strukturell unterschiedlichen Safenern beschrieben. Die in diesen Schriften spezifisch offenbarten Kombinationen von Herbiziden vom Typ der Benzoylisoxazole mit Safenern weisen jedoch eine nicht immer ausreichende Verträglichkeit in Kulturen von Nutzpflanzen auf.

Es wurde nun gefunden, daß ausgewählte Kombinationen von herbizid wirksamen Benzoylisoxazolen mit bestimmten Safenern eine hervorragende Verträglichkeit in Kulturen von Nutzpflanzen bei gleichzeitig hoher Wirksamkeit gegen unerwünschte Schadpflanzen aufweisen.

Ein Gegenstand der vorliegenden Erfindung ist somit ein herbizid wirksames Mittel, enthaltend eine Mischung aus
A) einer herbizid wirksamen Menge an einer oder mehreren Verbindungen der Formel (I) 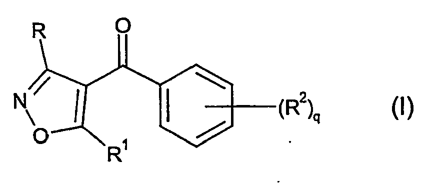 wobei die Symbole und Indizes folgende Bedeutungen haben:
   R ist Wasserstoff oder (C₁-C₄)-Alkoxycarbonyl;
   R¹ ist Wasserstoff, (C₁-C₄)-Alkyl, (C₂-C₄)-Alkenyl, (C₂-C₄)-Alkinyl, (C₃-C₈)-Cycloalkyl, (C₃-C₈)-Cycloalkenyl, (C₁-C₄)-Alkyl-(C₃-C₈)-cycloalkyl, (C₃-C₇)-Halocycloalkyl, (C₁-C₄)-Alkylthio(C₃-C₈)-cycloalkyl, (C₁-C₈)-Haloalkyl oder (C₂-C₈)-Haloalkenyl, vorzugsweise (C₃-C₇)-Cycloalkyl, (C₁-C₄)-Alkyl-(C₃-C₇)-cycloalkyl;
   R² sind gleich oder verschieden Halogen, Nitro, Cyano, (C₁-C₄)-Alkyl, (C₂-C₄)-Alkenyl, (C₂-C₄)-Alkinyl, (C₁-C₄)-Haloalkyl, (C₂-C₄)-Haloalkenyl, (C₂-C₄)-Haloalkinyl, (C₁-C₄)-Alkoxy-(C₁-C₄)-alkyl, (C₁-C₄)-Alkylthio, (C₁-C₄)-Alkylsulfinyl, (C₁-C₄)-Alkylsulfonyl, (C₁-C₄)-Alkoxy-(C₁-C₄)-alkoxy, (C₁-C₄)-Alkylcarbonyl, (C₁-C₄)-Alkylsulfonylamino, (C₁-C₄)-Alkoxy, (C₁-C₄)-Alkoxycarbonyl, (C₁-C₄)-Alkylaminosulfonyl, (C₁-C₄)-Dialkylaminosulfonyl, (C₁-C₄)-Dialkyl-carbamoyl, (C₁-C₄)-Haloalkylthio, (C₁-C₄)-Alkylsulfonyloxy oder (C₁-C₄)-Haloalkoxy;
   q ist 0, 1, 2, 3 oder 4;
   und
B) einer antidotisch wirksamen Menge an einem oder mehreren Safenern aus der Gruppe der Acylsulfamoylbenzoesäureamide der Formel (11), gegebenenfalls auch in Salzform, 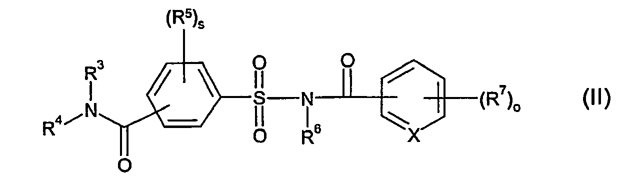 worin
   X CH oder N;
   R³ Wasserstoff, (C₁-C₆)-Alkyl, (C₃-C₆)-Cycloalkyl, (C₂-C₆)-Alkenyl, (C₂-C₆)-Alkinyl, (C₅-C₆)-Cycloalkenyl, Phenyl oder 3- bis 6-gliedriges Heterocyclyl mit bis zu drei Heteroatomen aus der Gruppe Stickstoff, Sauerstoff und Schwefel, wobei die sieben letztgenannten Reste gegebenenfalls durch einen oder mehrere, gleiche oder verschiedene Substituenten aus der Gruppe Halogen, (C₁-C₆)-Alkoxy, (C₁-C₆)-Haloalkoxy, (C₁-C₂)-Alkylsulfinyl, (C₁-C₂)-Alkyisulfonyl, (C₃-C₆)-Cycloalkyl, (C₁-C₄)-Alkoxycarbonyl, (C₁-C₄)-Alkylcarbonyl und Phenyl und im Falle cyclischer Reste auch (C₁-C₄)-Alkyl und (C₁-C₄)-Haloalkyl substituiert sind;
   R⁴ Wasserstoff, (C₁-C₆)-Alkyl, (C₂-C₆)-Alkenyl, (C₂-C₆)-Alkinyl, wobei die drei letztgenannten Reste gegebenenfalls durch einen oder mehrere, gleiche oder verschiedene Substituenten aus der Gruppe Halogen, Hydroxy, (C₁-C₄)-Alkyl, (C₁-C₄)-Alkoxy und (C₁-C₄)-Alkylthio substituiert sind, oder
   R³ und R⁴ bilden gemeinsam mit dem dem sie tragenden Stickstoffatom einen Pyrrolidinyl- oder Piperidinyl-Rest;
   R⁵ gleich oder verschieden Halogen, (C₁-C₄)-Haloalkyl, (C₁-C₄)-Haloalkoxy, Nitro, (C₁-C₄)-Alkyl, (C₁-C₄)-Alkoxy, (C₁-C₄)-Alkylsulfonyl, (C₁-C₄)-Alkoxycarbonyl oder (C₁-C₄)-Alkylcarbonyl;
   R⁶ Wasserstoff, (C₁-C₄)-Alkyl, (C₂-C₄)-Alkenyl oder (C₂-C₄)-Alkinyl;
   R⁷ gleich oder verschieden Halogen, Nitro, (C₁-C₄)-Alkyl, (C₁-C₄)-Haloalkyl, (C₁-C₄)-Haloalkoxy, (C₃-C₆)-Cycloalkyl, Phenyl, (C₁-C₄)-Alkoxy, Cyano, (C₁-C₄)-Alkylthio, (C₁-C₄)-Alkylsulfinyl, (C₁-C₄)-Alkylsulfonyl, (C₁-C₄)-Alkoxycarbonyl oder (C₁-C₄)-Alkylcarbonyl;
   s 0, 1 oder 2 und
   o 1 oder 2
   bedeuten, einschließlich der Stereoisomeren und der in der Landwirtschaft gebräuchlichen Salze.

Herbizid wirksame Menge bedeutet im Sinne der Erfindung eine Menge an einem oder mehreren Herbiziden, die geeignet ist, den Pflanzenwuchs negativ zu beinflussen.

Antidotisch wirksame Menge bedeutet im Sinne der Erfindung eine Menge an einem oder mehreren Safenern, die geeignet ist, der phytotoxischen Wirkung eines Herbizids oder Herbizidgemisches an einer Nutzpflanze zumindest teilweise entgegenzuwirken.

Sofern es im einzelnen nicht anders definiert wird, gelten für die Reste in den Formeln (I) und (II) und im allgemeinen die folgenden Definitionen.

Die Reste Alkyl, Alkoxy, Haloalkyl, Haloalkoxy, Alkylamino und Alkylthio sowie die entsprechenden ungesättigten und/oder substituierten Reste können im Kohlenstoffgerüst jeweils geradkettig oder verzweigt sein. Alkylreste, auch in den zusammengesetzten Bedeutungen wie Alkoxy, Haloalkyl usw. haben vorzugsweise 1 bis 4 C-Atome und, bedeuten z.B. Methyl, Ethyl, n- oder i-Propyl, n-, i-, t- oder 2-Butyl. Alkenyl- und Alkinylreste haben die. Bedeutung der den Alkylresten entsprechenden möglichen ungesättigten Reste; Alkenyl bedeutet z.B. Allyl, 1-Methylprop-2-en-1-yl, 2-Methyl-prop-2-en-1-yl, But-2-en-1-yl, But-3-en-1-yl, 1-Methyl-but-3-en-1-yl und 1-Methyl-but-2-en-1-yl. Alkinyl bedeutet z.B. Propargyl, But-2-in-1-yl, But-3-in-1-yl, 1-Methyl-but-3-in-1-yl. "(C₁-C₄)-Alkyl" ist die Kurzschreibweise für Alkyl mit 1 bis 4 C-Atomen; entsprechendes gilt für andere allgemeine Restedefinitionen mit in Klammern angegebenen Bereichen für die mögliche Anzahl von C-Atomen.

Cycloalkyl bedeutet bevorzugt einen cyclischen Alkylrest mit 3 bis 8, vorzugsweise 3 bis 7, besonders bevorzugt 3 bis 6 C-Atomen, beispielsweise Cyclopropyl, Cyclobutyl, Cyclopentyl und Cyclohexyl. Cycloalkenyl und Cycloalkinyl bezeichnen entsprechende ungesättigte Verbindungen.

Halogen bedeutet Fluor, Chlor, Brom oder lod. Haloalkyl, Haloalkenyl und Haloalkinyl bedeuten durch Halogen, vorzugsweise durch Fluor, Chlor und/oder Brom, insbesondere durch Fluor oder Chlor, teilweise oder vollständig substituiertes Alkyl, Alkenyl oder Alkinyl, z.B. CF₃, CHF₂, CH₂F, CF₃CF₂, CH₂FCHCl, CCl₃, CHCl₂, CH₂CH₂Cl. Haloalkoxy ist z.B. OCF₃, OCHF₂, OCH₂F, CF₃CF₂O, OCH₂CF₃ und OCH₂CH₂Cl. Entsprechendes gilt für sonstige Halogen substituierte Reste.

Heterocyclischer Ring, Heterocyclischer Rest oder Heterocyclyl bedeutet ein mono-, bi- oder polycyclisches Ringsystem, das gesättigt, ungesättigt und/oder aromatisch ist und eine oder mehrere, vorzugsweise 1 bis 4, Heteroatome, vorzugsweise aus der Gruppe N, S und O, enthält.

Bevorzugt sind gesättigte Heterocyclen mit 3 bis 7 Ringatomen und einem oder zwei Heteroatomen aus der Gruppe N, O und S, wobei die Chalcogene nicht benachbart sind. Besonders bevorzugt sind monocyclische Ringe mit 3 bis 7 Ringatomen und einem Heteroatom aus der Gruppe N, O und S, sowie Morpholin, Dioxolan, Piperazin, Imidazolin und Oxazolidin. Ganz besonders bevorzugte gesättigte Heterocyclen sind Oxiran, Pyrrolidon, Morpholin und Tetrahydrofuran.

Bevorzugt sind auch teilweise ungesättigte Heterocyclen mit 5 bis 7 Ringatomen und einem oder zwei Heteroatomen aus der Gruppe N, O und S. Besonders bevorzugt sind teilweise ungesättigte Heterocyclen mit 5 oder 6 Ringatomen und einem Heteroatom aus der Gruppe N, O und S. Ganz besonders bevorzugte teilweise ungesättigte Heterocyclen sind Pyrazolin, lmidazolin und lsoxazolin.

Ebenso bevorzugt ist Heteroaryl, z.B. mono- oder bicyclische aromatische Heterocyclen mit 5 oder 6 Ringatomen, die ein bis vier Heteroatome aus der Gruppe N, O, S enthalten, wobei die Chalcogene nicht benachbart sind. Besonders bevorzugt sind monocyclische aromatische Heterocyclen mit 5 oder 6 Ringatomen, die ein Heteroatom aus der Gruppe, N, O und S enthalten, sowie Pyrimidin, Pyrazin, Pyridazin, Oxazol, Thiazol, Thiadiazol, Oxadiazol, Pyrazol, Triazol und Isoxazol. Ganz besonders bevorzugt sind Pyrazol, Thiazol, Triazol und Furan.

Substituierte Reste, wie substituiertes Alkyl, Alkenyl, Alkinyl, Phenyl oder substituiertes Heterocyclyl, bedeuten einen vom unsubstituierten Grundkörper abgeleiteten substituierten Rest, wobei die Substituenten einen oder mehrere, vorzugsweise 1, 2 oder 3, im Falle von Cl und F auch bis zur maximal möglichen Anzahl, Substituenten aus der Gruppe Halogen, Alkoxy, Haloalkoxy, Alkylthio, Hydroxy, Amino, Nitro, Carboxy, Cyano, Azido, Alkoxycarbonyl, Alkylcarbonyl, Formyl, Carbamoyl, Mono- und Dialkylaminocarbonyl, substituiertes Amino wie Acylamino, Mono- und Dialkylamino und Alkylsulfinyl, Haloalkylsulfinyl, Alkylsulfonyl, Haloalkylsulfonyl und, im Falle cyclischer Reste, auch Alkyl und Haloalkyl sowie den genannten gesättigten kohlenwasserstoffhaltigen Substituenten entsprechende ungesättigte aliphatische Substituenten, vorzugsweise Alkenyl, Alkinyl, Alkenyloxy, Alkinyloxy, bedeuten. Bei Resten mit C-Atomen sind solche mit 1 bis 4 C-Atomen, insbesondere 1 oder 2 C-Atomen, bevorzugt. Bevorzugt sind Substituenten aus der Gruppe Halogen, z.B. Fluor oder Chlor, (C₁-C₄)-Alkyl, vorzugsweise Methyl oder Ethyl, (C₁-C₄)-Haloalkyl, vorzugsweise Trifluormethyl, (C₁-C₄)-Alkoxy, vorzugsweise Methoxy oder Ethoxy, (C₁-C₄)-Haloalkoxy, Nitro und Cyano. Besonders bevorzugt sind dabei die Substituenten Methyl, Methoxy und Chlor.

Mono- oder disubstituiertes Amino bedeutet einen chemisch stabilen Rest aus der Gruppe der substituierten Aminoreste, welche beispielsweise durch einen oder zwei gleiche oder verschiedene Reste aus der Gruppe Alkyl, Alkoxy, Acyl und Aryl N-substituiert sind; vorzugsweise Monoalkylamino, Dialkylamino, Acylamino, Arylamino, N-Alkyl-N-Arylamino sowie N-Heterocyclen. Dabei sind Alkylreste mit 1 bis 4 C-Atomen bevorzugt. Aryl ist dabei vorzugsweise Phenyl. Substituiertes Aryl ist dabei vorzugsweise substituiertes Phenyl. Für Acyl gilt dabei die weiter unten genannte Definition, vorzugsweise (C₁-C₄)-Alkanoyl. Entsprechendes gilt für substituiertes Hydroxylamino oder Hydrazino.

Gegebenenfalls substituiertes Phenyl ist vorzugsweise Phenyl, das unsubstituiert oder ein- oder mehrfach, vorzugsweise bis zu dreifach, bei Halogen wie Cl und F auch bis zu fünffach, durch gleiche oder verschiedene Reste aus der Gruppe Halogen, (C₁-C₄)-Alkyl, (C₁-C₄)-Alkoxy, (C₁-C₄)-Haloalkyl, (C₁-C₄)-Haloalkoxy und Nitro substituiert ist, z.B. o-, m- und p-Tolyl, Dimethylphenyle, 2-, 3- und 4-Chlorphenyl, 2-, 3- und 4-Trifluor- und -Trichlorphenyl, 2,4-, 3,5-, 2,5- und 2,3-Dichlorphenyl, o-, m- und p-Methoxyphenyl.

Ein Acylrest bedeutet den Rest einer organischen Säure mit vorzugsweise bis zu 6 C-Atomen, z.B. den Rest einer Carbonsäure und Reste davon abgeleiteter Säuren wie der Thiocarbonsäure, gegebenenfalls N-substituierter Iminocarbonsäuren, oder der Rest von Kohlensäuremonoestern, gegebenenfalls N-substituierter Carbaminsäuren, Sulfonsäuren, Sulfinsäuren, Phosphonsäuren, Phosphinsäuren. Acyl bedeutet beispielsweise Formyl, Alkylcarbonyl, wie (C₁-C₄-Alkyl)-carbonyl, Phenylcarbonyl, wobei der Phenylring substituiert sein kann, z.B. wie oben für Phenyl angegeben, oder Alkyloxycarbonyl, Phenyloxycarbonyl, Benzyloxycarbonyl, Alkylsulfonyl, Alkylsulfinyl oder N-Alkyl-1-iminoalkyl.

Von den Formeln (I) bis (II) umfaßt sind auch alle Stereoisomeren, welche die gleiche topologische Verknüpfung der Atome aufweisen, und deren Gemische. Solche Verbindungen enthalten ein oder mehrere asymmetrische C-Atome oder auch Doppelbindungen, die in den allgemeinen Formeln nicht gesondert angegeben sind. Die durch ihre spezifische Raumform definierten möglichen Stereoisomeren, wie Enantiomere, Diastereomere, Z- und E-lsomere, können nach üblichen Methoden aus Gemischen der Stereoisomeren erhalten oder auch durch stereoselektive Reaktionen in Kombination mit dem Einsatz von stereochemisch reinen Ausgangsstoffen hergestellt werden.

Als herbizide Wirkstoffe eignen sich erfindungsgemäß solche Verbindungen der allgemeinen Formel (I), die allein nicht oder nicht optimal in monokotylen Kulturpflanzen wie beispielsweise Getreidekulturen, Reis, Hirse, Zuckerrohr und/oder Mais eingesetzt werden können, weil sie die Kulturpflanzen zu stark schädigen.

Herbizide der allgemeinen Formel (I) sind z.B. aus EP-A 0 137 963, EP-A 0 352 543, EP-A 0 418 175, EP-A 0 496 631 und AU-A 672 058 bekannt. Die Verbindungen der allgemeinen Formel (11) sind beispielsweise aus WO 99/19744 bekannt. Die zitierten Schriften enthalten ausführliche Angaben zu Herstellungsverfahren und Ausgangsmaterialien. Auf diese Schriften wird ausdrücklich Bezug genommen, sie gelten durch Zitat als Bestandteil dieser Beschreibung.

Eine besondere Bedeutung haben Herbizid-Safener-Kombinationen, enthaltend Herbizide der Formel (I), bei denen die Symbole folgende Bedeutungen haben:
R ist Wasserstoff oder Ethoxycarbonyl;
R¹ ist Cyclopropyl, und
R² sind gleich oder verschieden Halogen, Methyl, Ethyl, Trifluormethyl, Methylthio, Ethylthio, Methylsulfonyl, Ethylsulfonyl, Methoxy, Ethoxy, Halogenmethoxy oder Halogenethoxy.

Bevorzugt sind Herbizid-Safener-Kombinationen, enthaltend Herbizide der Formel (I), bei denen die Symbole und Indizes folgende Bedeutungen haben:
R² sind gleich oder verschieden Chlor, Brom, Fluor, Methyl, Ethyl, Trifluormethyl, Methylsulfonyl, Ethylsulfonyl, Methoxy oder Ethoxy;
q ist 2 oder 3.

Ebenfalls bevorzugt sind Herbizid-Safener-Kombinationen, enthaltend Herbizide der Formel (1), bei denen ein R² für einen 2-Methylsulfonyl- und ein weiteres R² für einen 4-Trifluormethyl-, 4-Chlor- oder 4-Brom-Rest steht.

Besonders bevorzugt sind Herbizid-Safener-Kombinationen, enthaltend Safener der Formel (II), bei denen die Symbole und Indizes folgende Bedeutungen haben:
X bedeutet CH;
R³ ist Wasserstoff, (C₁-C₆)-Alkyl, (C₃-C₆)-Cycloalkyl, (C₂-C₆)-Alkenyl, (C₅-C₆)-Cycloalkenyl oder Phenyl;
R⁶ ist Wasserstoff;
R⁷ ist gleich oder verschieden Halogen, Nitro, (C₁-C₄)-Alkyl, (C₁-C₄)-Haloalkyl, (C₁-C₄)-Haloalkoxy, (C₃-C₆)-Cycloalkyl, (C₁-C₄)-Alkoxy, Cyano, (C₁-C₄)-Alkylthio, (C₁-C₄)-Alkylsulfinyl, (C₁-C₄)-Alkylsulfonyl, (C₁-C₄)-Alkoxycarbonyl oder (C₁-C₄)-Alkylcarbonyl.

Ebenfalls besonders bevorzugt sind Herbizid-Safener-Kombinationen, enthaltend Safener der Formel (II), bei denen denen die Symbole und indizes folgende Bedeutungen haben:
R³ ist (C₂-C₆)-Alkinyl oder
R³ und R⁴ bilden gemeinsam mit dem sie tragenden Stickstoffatom einen Pyrrolidinyl- oder Piperidinyl-Rest, und
R⁶ ist Methyl.

Ganz besonders bevorzugt sind Herbizid-Safener-Kombinationen, enthaltend Safener der Formel (11), bei denen die Gruppe "R³R⁴N-CO" sich in 4- Position am Phenylring befindet.

Bevorzugte Gruppen von Herbiziden der Formel (1) sind in den folgenden Tabellen 1 bis 4 aufgeführt. Darin bedeuten die verwendeten Abkürzungen folgendes:
Et = Ethyl Me = Methyl

**Tabelle 1**

| | | |
|---|---|---|
| 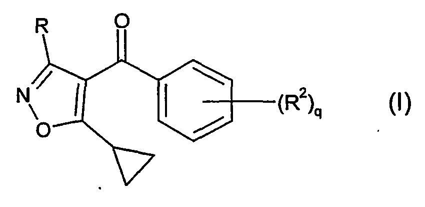 | | |

| **Beispiel-Nr** | **R** | **(R⁹)_{q}** |
|---|---|---|
| 1-1 | H | 2-SO₂Me-4-CF₃ |
| 1-2 | H | 2-SO₂Me-4-Cl |
| 1-3 | H | 2-SO₂Me-4-Br |
| 1-4 | H | 2-SO₂Me-4-OCF₃ |
| 1-5 | H | 2,4-Cl₂-3-Me |
| 1-6 | H | 2-CF₃-4-SO₂Me |
| 1-7 | H | 2-Cl-4-SO₂Me |
| 1-8 | H | 2-Cl-4-SO₂Me |
| 1-9 | H | 2-SO₂Me-4-CF₃ |
| 1-10 | H | 2-Cl-3-OEt-4-SO₂Et |
| 1-11 | H | 2-SMe-4-CF₃ |
| 1-12 | H | 2-SMe-4-Br |
| 1-13 | H | 3,4-Cl₂-2-SMe |
| 1-14 | H | 2-SO₂Me-4-Cl |
| 1-15 | H | 2-NO₂-4-SO₂Me |
| 1-16 | H | 2,4-Cl₂-3-Me |
| 1-17 | H | 2,4-Br₂-3-OCH₂SMe |
| 1-18 | COOEt | 2,4-Br₂ |
| 1-19 | COOEt | 2-SO₂Me-4-CF₃ |
| 1-20 | COOEt | 2-SO₂Me-4-Cl |
| 1-21 | COOEt | 2-Cl-3-CO₂Me-4-SO₂Me |

Die Safener (Antidote) der Formel (II) reduzieren oder unterbinden phytotoxische Effekte, die beim Einsatz der herbiziden Wirkstoffe der Formel (I) in Kulturen von Nutzpflanzen auftreten können, ohne die Wirksamkeit dieser herbiziden Wirkstoffe gegen Schadpflanzen wesentlich zu beeinträchtigen. Hierdurch kann das Einsatzgebiet herkömmlicher Pflanzenschutzmittel ganz erheblich erweitert und z.B. auf Kulturen wie Weizen, Gerste, Mais, Reis und andere Kulturen ausgedehnt werden, in denen bisher ein Einsatz der Herbizide nicht möglich oder nur beschränkt, das heißt, in niedrigen Dosierungen mit wenig Breitenwirkung möglich war.

Die herbiziden Wirkstoffe und die erwähnten Safener können zusammen (als fertige Formulierung oder im Tank-mix-Verfahren) oder in beliebiger Reihenfolge nacheinander ausgebracht werden. Das Gewichtsverhältnis Safener: herbizider Wirkstoff kann innerhalb weiter Grenzen variieren und ist vorzugsweise im Bereich von 1:100 bis 100:1, insbesondere von 1:10 bis 10:1. Die jeweils optimalen Mengen an herbizidem Wirkstoff und Safener sind vom Typ des verwendeten herbiziden Wirkstoffs oder vom verwendeten Safener sowie von der Art des zu behandelnden Pflanzenbestandes abhängig und lassen sich von Fall zu Fall durch einfache, routinemäßige Vorversuche ermitteln.

Haupteinsatzgebiete für die Anwendung der erfindungsgemäße Kombinationen sind vor allem monokotyle Kulturpflanzen wie beispielsweise Mais und Getreidekulturen (z.B. Weizen, Roggen, Gerste, Hafer), Reis, Sorghum, Zuckerrohr, aber auch Baumwolle und Sojabohne, vorzugsweise Getreide, Reis, Hirse, Zuckerrohr und Mais.

Die erfindungsgemäß eingesetzten Safener können je nach ihren Eigenschaften zur Vorbehandlung des Saatgutes der Kulturpflanze (Beizung der Samen) verwendet werden oder vor der Saat in die Saatfurchen eingebracht oder zusammen mit dem Herbizid vor oder nach dem Auflaufen der Pflanzen angewendet werden. Vorauflaufbehandlung schließt sowohl die Behandlung der Anbaufläche vor der Aussaat als auch die Behandlung der angesäten, aber noch nicht bewachsenen Anbauflächen ein. Bevorzugt ist neben der Saatgutbehandlung die gemeinsame Anwendung mit dem Herbizid. Hierzu können Tankmischungen oder Fertigformulierungen eingesetzt werden.

Die benötigten Aufwandmengen der Safener können je nach Indikation und herbiziden Wirkstoff innerhalb weiter Grenzen schwanken und sind in der Regel im Bereich von 0,001 bis 5 kg, vorzugsweise 0,005 bis 0,5 kg Wirkstoff je Hektar.

Gegenstand der vorliegenden Erfindung ist deshalb auch ein Verfahren zum Schutz von Kulturpflanzen vor phytotoxischen Nebenwirkungen von Herbiziden der Formel (1), das dadurch gekennzeichnet ist, daß eine antidotisch wirksame Menge einer Verbindung der Formel (II) vor, nach oder gleichzeitig mit dem herbiziden Wirkstoff A der Formel (1) auf die Pflanzen, Pflanzensamen oder die Anbaufläche appliziert wird.

Die erfindungsgemäße Herbizid-Safener Kombination kann auch zur Bekämpfung von Schadpflanzen in Kulturen von bekannten oder noch zu entwickelnden gentechnisch veränderten Pflanzen eingesetzt werden. Die transgenen Pflanzen zeichnen sich in der Regel durch besondere vorteilhafte Eigenschaften aus, beispielsweise durch Resistenzen gegenüber bestimmten Pflanzenschutzmitteln, Resistenzen gegenüber Pflanzenkrankheiten oder Erregern von Pflanzenkrankheiten wie bestimmten Insekten oder Mikroorganismen wie Pilzen, Bakterien oder Viren. Andere besondere Eigenschaften betreffen z. B. das Erntegut hinsichtlich Menge, Qualität, Lagerfähigkeit, Zusammensetzung und spezieller Inhaltsstoffe. So sind transgene Pflanzen mit erhöhtem Stärkegehalt oder veränderter Qualität der Stärke oder solche mit anderer Fettsäurezusammensetzung des Ernteguts bekannt.

Bevorzugt ist die Anwendung der erfindungsgemäßen Kombinationen in wirtschaftlich bedeutenden transgenen Kulturen von Nutz-und Zierpflanzen, z. B. von Getreide wie Weizen, Gerste, Roggen, Hafer, Hirse, Reis, Maniok und Mais oder auch Kulturen von Zuckerrübe, Baumwolle, Soja, Raps, Kartoffel, Tomate, Erbse und anderen Gemüsesorten.

Bei der Anwendung der erfindungsgemäßen Kombinationen in transgenen Kulturen treten neben den in anderen Kulturen zu beobachtenden Wirkungen gegenüber Schadpflanzen oftmals Wirkungen auf, die für die Applikation in der jeweiligen transgenen Kultur spezifisch sind, beispielsweise ein verändertes oder speziell erweitertes Unkrautspektrum, das bekämpft werden kann, veränderte Aufwandmengen, die für die Applikation eingesetzt werden können, vorzugsweise gute Kombinierbarkeit mit den Herbiziden, gegenüber denen die transgene Kultur resistent ist, sowie Beeinflussung von Wuchs und Ertrag der transgenen Kulturpflanzen.

Gegenstand der Erfindung ist deshalb auch die Verwendung der erfindungsgemäßen Kombination zur Bekämpfung von Schadpflanzen in transgenen Kulturpflanzen.

Die Safener der Formeln (II) und deren Kombinationen mit einem oder mehreren der genannten herbiziden Wirkstoffe der Formel (I) können auf verschiedene Art formuliert werden, je nachdem welche biologischen und/oder chemischphysikalischen Parameter vorgegeben sind. Als Formulierungsmöglichkeiten kommen beispielsweise in Frage:
Spritzpulver (WP), emulgierbare Konzentrate (EC), wasserlösliche Pulver (SP), wasserlösliche Konzentrate (SL), konzentrierte Emulsionen (BW) wie Öl-in-Wasser und Wasser-in-Öl-Emulsionen, versprühbare Lösungen oder Emulsionen, Kapselsuspensionen (CS), Dispersionen auf Öl- oder Wasserbasis (SC),
Suspoemulsionen, Suspensionskonzentrate, Stäubemittel (DP), ölmischbare Lösungen (OL), Beizmittel, Granulate (GR) in Form von Mikro-, Sprüh-, Aufzugs- und Adsorptionsgranulaten, Granulate für die Boden- bzw. Streuapplikation, wasserlösliche Granulate (SG), wasserdispergierbare Granulate (WG), ULV-Formulierungen, Mikrokapseln und Wachse.

Diese einzelnen Formulierungstypen sind im Prinzip bekannt und beispielsweise beschrieben in: Winnacker-Küchler, "Chemische Technologie" Band 7, C. Hauser Verlag München, 4. Aufl. 1986; Wade van Valkenburg, "Pesticide Formulations", Marcel Dekker N.Y., 1973; K. Martens, "Spray Drying Handbook", 3rd Ed. 1979, G. Goodwin Ltd. London.

Die gegebenenfalls notwendigen Formulierungshilfsmittel, wie Inertmaterialien, Tenside, Lösungsmittel und weitere Zusatzstoffe, sind ebenfalls bekannt und z.B. beschrieben in: Watkins, "Handbook of Insecticide Dust Diluents and Carriers", 2nd Ed., Darland Books, Caldwell N.J., H.v. Olphen, "Introduction to Clay Colloid Chemistry"; 2nd Ed., J. Wiley & Sons, N.Y.; C. Marsden, "Solvents Guide"; 2nd Ed., Interscience, N.Y. 1963; McCutcheon's "Detergents and Emulsifiers Annual", MC Publ. Corp., Ridgewood N.J.; Sisley and Wood, "Encyclopedia of Surface Active Agents", Chem. Publ. Co. Inc., N.Y. 1964; Schönfeldt, "Grenzflächenaktive Äthylenoxidaddukte", Wiss. Verlagsgesell., Stuttgart 1976; Winnacker-Küchler, "Chemische Technologie", Band 7, C. Hauser Verlag München, 4. Aufl. 1986.

Auf der Basis dieser Formulierungen lassen sich auch Kombinationen mit anderen als Pflanzenschutzmitteln wirksamen Stoffen, wie Insektiziden, Akariziden, Herbiziden, Fungiziden, sowie mit Safenern, Düngemitteln und/oder Wachstumsregulatoren herstellen, z.B. in Form einer Fertigformulierung oder als Tankmix.

Spritzpulver sind in Wasser gleichmäßig dispergierbare Präparate, die neben dem Wirkstoff außer einem Verdünnungs- oder Inertstoff noch Tenside ionischer und/oder nichtionischer Art (Netzmittel, Dispergiermittel), z.B. polyoxyethylierte Alkylphenole, polyoxethylierte Fettalkohole, polyoxethylierte Fettamine, Alkylbenzolsulfonate, Alkansulfonate, Fettalkoholpolyglykolethersulfate, ligninsulfonsaures Natrium, 2,2'-dinaphthylmethan-6,6'-disulfonsaures Natrium, dibutylnaphthalin-sulfonsaures Natrium oder auch oleoylmethyltaurinsaures Natrium enthalten. Zur Herstellung der Spritzpulver werden die herbiziden Wirkstoffe beispielsweise in üblichen Apparaturen, wie Hammer-, Gebläse- und Luftstrahlmühlen, feingemahlen und gleichzeitig oder anschließend mit den Formulierungshilfsmitteln vermischt.

Emulgierbare Konzentrate werden z.B. durch Auflösen des Wirkstoffes in einem organischen Lösungsmittel, wie Butanol, Cyclohexanon, Dimethylformamid, Xylol oder auch höhersiedende Kohlenwasserstoffe wie Aromaten, gesättige oder ungesättigte Aliphaten oder Alicyclen, oder Mischungen der organischen Lösungsmittel unter Zusatz von einem oder mehreren Tensiden ionischer und/oder nichtionischer Art (Emulgatoren) hergestellt. Als Emulgatoren können beispielsweise verwendet werden: (C₆-C₁₈)-Alkylarylsulfonsaure Calzium-Salze, wie Ca-dodecylbenzolsulfonat, oder nichtionische Emulgatoren, wie Fettsäurepolyglykolester, (C₂-C₁₈)-Alkylarylpolyglykolether, Fettalkoholpolyglykolether, Propylenoxid-Ethylenoxid-Kondensationsprodukte, Alkylpolyether, Sorbitanester, wie Sorbitanfettsäureester, oder Polyoxethylensorbitanester, wie Polyoxyethylensorbitanfettsäureester.

Stäubemittel erhält man im allgemeinen durch Vermahlen des Wirkstoffes mit fein verteilten festen Stoffen, z.B. Talkum, natürlichen Tonen, wie Kaolin, Bentonit und Pyrophyllit, oder Diatomeenerde.

Suspensionskonzentrate können auf Wasser- oder Ölbasis sein. Sie können beispielsweise durch Naß-Vermahlung mittels handelsüblicher Perlmühlen und gegebenenfalls Zusatz von Tensiden, wie sie z.B. bei den anderen Formulierungstypen bereits aufgeführt sind, hergestellt werden.

Emulsionen, z.B. Öl-in-Wasser-Emulsionen (EW), lassen sich beispielsweise mittels Rührern, Kolloidmühlen und/oder statischen Mischern unter Verwendung von wäßrigen organischen Lösungsmitteln und gegebenenfalls Tensiden, wie sie z.B. bei den anderen Formulierungstypen bereits aufgeführt sind, herstellen.

Granulate können entweder durch Verdüsen des Wirkstoffes auf adsorptionsfähiges, granuliertes Inertmaterial hergestellt werden oder durch Aufbringen von Wirkstoffkonzentraten mittels Klebemitteln, z.B. Polyvinylalkohol, polyacrylsaurem Natrium oder auch Mineralölen, auf die Oberfläche von Trägerstoffen, wie Sand, Kaolinite oder von granuliertem Inertmaterial. Auch können geeignete Wirkstoffe in der für die Herstellung von Düngemittelgranulaten üblichen Weise - gewünschtenfalls in Mischung mit Düngemitteln - granuliert werden. Wasserdispergierbare Granulate werden in der Regel nach den üblichen Verfahren, wie Sprühtrocknung, Wirbelbett-Granulierung, Teller-Granulierung, Mischung mit Hochgeschwindigkeitsmischem und Extrusion ohne festes Inertmaterial, hergestellt. Zur Herstellung von Teller-, Fließbett-, Extruder- und Sprühgranulaten siehe z.B. in "Spray-Drying Handbook" 3rd ed. 1979, G. Goodwin Ltd., London; J.E. Browning, "Agglomeration", Chemical and Engineering 1967, Seiten 147 ff; "Perry's Chemical Engineer's Handbook", 5th Ed., McGraw-Hill, New York 1973, S. 8-57.

Für weitere Einzelheiten zur Formulierung von Pflanzenschutzmitteln siehe z.B. G.C. Klingman, "Weed Control as a Science", John Wiley and Sons, Inc., New York, 1961, Seiten 81-96 und J.D. Freyer, S.A. Evans, "Weed Control Handbook", 5th Ed., Blackwell Scientific Publications, Oxford, 1968, Seiten 101-103.

Die agrochemischen Formulierungen enthalten in der Regel 0,1 bis 99 Gew.-%, insbesondere 0,1 bis 95 Gew.-%, Wirkstoffe der Formel (II) oder des Herbizid/Antidot-Wirkstoffgemischs (I) und (II) und 1 bis 99,9 Gew.-%, insbesondere 5 bis 99,8 Gew.-%, eines festen oder flüssigen Zusatzstoffes und 0 bis 25 Gew.-%, insbesondere 0,1 bis 25 Gew.-% eines Tensides.

In Spritzpulvern beträgt die Wirkstoffkonzentration z.B. etwa 10 bis 90 Gew.%, der Rest zu 100 Gew.-% besteht aus üblichen Formulierungsbestandteilen. Bei emulgierbaren Konzentraten beträgt die Wirkstoffkonzentration etwa 1 bis 80 Gew.-%. Staubförmige Formulierungen enthalten etwa 1 bis 20 Gew.-% an Wirkstoffen, versprühbare Lösungen etwa 0,2 bis 20 Gew.-% Wirkstoffe. Bei Granulaten, wie wasserdispergierbaren Granulaten, hängt der Wirkstoffgehalt zum Teil davon ab, ob die wirksame Verbindung flüssig oder fest vorliegt. In der Regel liegt der Gehalt bei den in Wasser dispergierbaren Granulaten zwischen 10 und 90 Gew.-%.

Daneben enthalten die genannten Wirkstofformulierungen gegebenenfalls die jeweils üblichen Haft-, Netz-, Dispergier-, Emulgier-, Penetrations-, Konservierungs-, Frostschutz- und Lösungsmittel, Füll-, Träger- und Farbstoffe, Entschäumer, Verdunstungshemmer und den pH-Wert und die Viskosität beeinflussende Mittel.

Als Kombinationspartner für die erfindungsgemäßen Mischungen in Mischungsformulierungen oder im Tank-Mix sind beispielsweise bekannte Wirkstoffe einsetzbar, wie sie in z.B. Weed Research 26, 441-445 (1986), oder "The Pesticide Manual", 12th edition, The British Crop Protection Council, 2000, und dort zitierter Literatur beschrieben sind. Als literaturbekannte Herbizide, die mit den erfindungsgemäßen Mischungen kombiniert werden können, sind z.B. folgende Wirkstoffe zu nennen (Anmerkung: Die Verbindungen sind entweder mit dem "common name" nach der International Organization for Standardization (ISO) oder mit dem chemischen Namen, ggf. zusammen mit einer üblichen Codenummer bezeichnet):

acetochlor; acifluorfen; aclonifen; AKH 7088, d.h. [[[1-[5-[2-Chloro-4-(trifluoromethyl)-phenoxy]-2-nitrophenyl]-2-methoxyethylidene]-amino]-oxy]-essigsäure und - essigsäuremethylester; alachlor; alloxydim; ametryn; amidosulfuron; amitrol; AMS, d.h. Ammoniumsulfamat-,- anilofos; asulam; atrazin; azafenidine (DPX-R6447), azimsulfurone (DPX-A8947); aziprotryn; barban; BAS 516 H, d.h. 5-Fluor-2-phenyl-4H-3,1-benzoxazin-4-on; benazolin; benfluralin; benfuresate; bensulfuron-methyl; bensulide; bentazone; benzofluor; benzoylprop-ethyl; benzthiazuron; bialaphos; bifenox; bispyribac-natrium (KIH-2023), bromacil; bromobutide; bromofenoxim; bromoxynil; bromuron; buminafos; busoxinone; butachlor; butamifos; butenachlor; buthidazole; butralin; butroxydim (ICI-0500), butylate; cafenstrole (CH-900); carbetamide; cafentrazone; CDAA, d.h. 2-Chlor-N,N-di-2-propenylacetamid; CDEC, d.h. Diethyldithiocarbaminsäure-2-chlorallylester; chlomethoxyfen; chloramben; chloransulam-methyl (XDE-565), chlorazifop-butyl, chlorbromuron; chlorbufam; chlorfenac; chlorflurecol-methyl; chloridazon; chlorimuron ethyl; chlomitrofen; chlorotoluron; chloroxuron; chlorpropham; chlorsulfuron; chlorthal-dimethyl; chlorthiamid; cinidon-ethyl, cinmethylin; cinosulfuron; clethodim; clodinafop und dessen Esterderivate (z.B. clodinafop-propargyl); clomazone; clomeprop; cloproxydim; clopyralid; cumyluron (JC 940); cyanazine; cycloate; cyclosulfamuron (AC 014); cycloxydim; cycluron; cyhalofop und dessen Esterderivate (z.B. Butylester, DEH-112); cyperquat; cyprazine; cyprazole; 2,4-DB; dalapon; desmedipham; desmetryn; di-allate; dicamba; dichlobenil; dichlorprop; diclofop und dessen Ester wie diclofop-methyl; diclosulam (XDE-564), diethatyl; difenoxuron; difenzoquat; diflufenican; diflufenzopyr-natrium (SAN-835H), dimefuron; dimethachlor; dimethametryn; dimethenamid (SAN-582H); dimethazone, 5-(4,6-Dimethylpyrimidin-2-yl-carbamoylsulfamoyl)-1-(2-pyridyl)-pyrazol-4-carbonsäuremethylester (NC-330); triaziflam (IDH-1105), clomazon; dimethipin; dimetrasulfuron, dinitramine; dinoseb; dinoterb; diphenamid; dipropetryn; diquat; dithiopyr; diuron; DNOC; eglinazine-ethyl; EL 177, d.h. 5-Cyano-1-(1,1-dimethylethyl)-N-methyl-1H-pyrazole-4-carboxamid; endothal; epoprodan (MK-243), EPTC; esprocarb; ethalfluralin; ethametsulfuronmethyl; ethidimuron; ethiozin; ethofumesate; F5231, d.h. N-[2-Chlor-4-fluor-5-[4-(3-fluorpropyl)-4,5-dihydro-5-oxo-1H-tetrazol-1-yl]-phenyl]-ethansulfonamid; ethoxyfen und dessen Ester (z.B. Ethylester, HN-252); ethoxysulfuron (aus EP 342569) etobenzanid (HW 52); 3-(4-Ethoxy-6-ethyl-1,3,5-triazin-2-yl)-1-(2,3-dihydro-1,1-dioxo-2-methylbenzo[b]thiophen-7-sulfonyl)hamstoff (EP-A 079 683); 3-(4-Ethyl-6-methoxy-1,3,5-triazin-2-yl)-1-(2,3-dihydro-1,1-dioxo-2-methylbenzo[b]thiophen-7-sulfonyl)harnstoff (EP-A 079 683); fenoprop; fenoxan, fenoxaprop und fenoxaprop-P sowie deren Ester, z.B. fenoxaprop-P-ethyl und fenoxaprop-ethyl; fenoxydim; fenuron; flamprop-methyl; flazasulfuron; flufonacet (BAY-FOE-5043), fluazifop und fluazifop-P, florasulam (DE-570) und deren Ester, z.B. fluazifop-butyl und fluazifop-P-butyl; fluchloralin; flumetsulam; flumeturon; flumiclorac und dessen Ester (z.B. Pentylester, S-23031); flumioxazin (S-482); flumipropyn; flupoxam (KNW-739); fluorodifen; fluoroglycofenethyl; flupropacil (UBIC-4243); flupyrsulfuron-methyl natrium (DPX-KE459), fluridone; flurochloridone; fluroxypyr; flurtamone; fluthiacet-methyl (KIH-9201), fomesafen; fosamine; furyloxyfen; glufosinate; glyphosate; halosafen; halosulfuron und dessen Ester (z.B. Methylester, NC-319); haloxyfop und dessen Ester; haloxyfop-P (= R-haloxyfop) und dessen Ester; hexazinone; imazamethabenz-methyl; imazamox (AC-299263), imazapyr; imazaquin und Salze wie das Ammoniumsalz; imazosulfuron; imazethamethapyr; imazethapyr; iodosulfuron (Methyl-4-iod-2-[3-(4-methoxy-6-methyl-1,3,5-triazin-2-yl)ureidosulfonyl]-benzoat, Natriumsalz, WO 92/13845); ioxynil; isocarbamid; isopropalin; isoproturon; isouron; isoxaben; isoxapyrifop; karbutilate; lactofen; lenacil; linuron; MCPA; MCPB; mecoprop; mefenacet; mefluidid; metamitron; metazachlor; methabenzthiazuron; metham; methazole; methoxyphenone; methyldymron; metabenzuron, methobenzuron; Methyl-2-[3-(4,6-dimethoxypyrimidin-2-yl)ureidosulfonyl]-4-methansulfonamidomethylbenzoat (WO 95/10507); metobromuron; metolachlor; S-metolachlor, metosulam (XRD 511); metoxuron; metribuzin; metsulfuron-methyl; MH; molinate; monalide; monocarbamide dihydrogensulfate; monolinuron; monuron; naproanilide; MT 128, d.h. 6-Chlor-N-(3-chlor-2-propenyl)-5-methyl-N-phenyl-3-pyridazinamin; MT 5950, d.h. N-[3-Chlor-4-(1-methylethyl)-phenyl]-2-methylpentanamid; N,N-Dimethyl-2-[3-(4,6-dimethoxypyrimidin-2-yl)ureidosulfonyl]-4-formylamino-benzamid (WO 95/01344); napropamide; naptalam; NC 310, d.h. 4-(2,4-dichlorbenzoyl)-1-methyl-5-benzyloxypyrazol; neburon; nicosulfuron; nipyraclophen; nitralin; nitrofen; nitrofluorfen; norflurazon; orbencarb; oryzalin; oxadiargyl (RP-020630); oxadiazon; oxaziclomefone (MY-100), oxyfluorfen; oxasulfuron (CGA-277476), paraquat; pebulate; pendimethalin; pentoxazone (KPP-314), perfluidone; phenisopham; phenmedipham; picloram; piperophos; piributicarb; pirifenop-butyl; pretilachlor; primisulfuron-methyl; procyazine; prodiamine; profluralin; proglinazine-ethyl; prometon; prometryn; propachlor; propanil; propaquizafop und dessen Ester; propazine; propham; propisochlor; propyzamide; prosulfalin; prosulfocarb; prosulfuron (CGA-152005); prynachlor; pyraflufen-ethyl (ET-751), pyrazon; pyrazosulfuron-ethyl; pyrazoxyfen; pyribenzoxim, pyridate; pyriminobac-methyl (KIH-6127), pyrithiobac (KIH-2031); pyroxofop und dessen Ester (z.B. Propargylester); quinclorac; quinmerac; quinofop und dessen Esterderivate, quizalofop und quizalofop-P und deren Esterderivate z.B. quizalofop-ethyl; quizalofop-P-tefuryl und - ethyl; renriduron; rimsulfuron (DPX-E 9636); S 275, d.h. 2-[4-Chlor-2-fluor-5-(2-propynyloxy)-phenyl]-4,5,6,7-tetrahydro-2H-indazol; secbumeton; sethoxydim; siduron; simazine; simetryn; SN 106279, d.h. 2-[[7-[2-Chlor-4-(trifluor-methyl)-phenoxy]-2-naphthalenyl]-oxy]-propansäure und -methylester, sulfentrazon (FMC-97285, F-6285); sulfazuron; sulfometuron-methyl; sulfosate. (ICI-A0224); sulfosulfuron (MON-37500), TCA; tebutam (GCP-5544); tebuthiuron; tepraloxidim (BAS-620H), terbacil; terbucarb; terbuchlor; terbumeton; terbuthylazine; terbutryn; TFH 450, d.h. N,N-Diethyl-3-[(2-ethyl-6-methylphenyl)-sulfonyl]-1 H-1,2,4-triazol-1-carboxamid; thenylchlor (NSK-850); thiazafluron; thiazopyr (Mon-13200); thidiazimin (SN-124085); thifensulfuron-methyl; thiobencarb; tiocarbazil; tralkoxydim; tri-allate; triasulfuron; triazofenamide; tribenuron-methyl; triclopyr; tridiphane; trietazine; trifluralin; triflusulfuron und Ester (z.B. Methylester, DPX-66037); trimeturon; tsitodef; vemolate; WL 110547, d.h. 5-Phenoxy-1-[3-(trifluormethyl)-phenyl]-1 H-tetrazol; UBH-509; D-489; LS 82-556; KPP-300; KPP-421, MT-146, NC-324; KH-218; DPX-N8189; DOWCO-535; DK-8910; V-53482; PP-600; MBH-001.

Zur Anwendung werden die in handelsüblicher Form vorliegenden Formulierungen gegebenenfalls in üblicher Weise verdünnt z.B. bei Spritzpulvern, emulgierbaren Konzentraten, Dispersionen und wasserdispergierbaren Granulaten mittels Wasser. Staubförmige Zubereitungen, Boden- bzw. Streugranulate sowie versprühbare Lösungen werden vor der Anwendung üblicherweise nicht mehr mit weiteren inerten Stoffen verdünnt.

Mit den äußeren Bedingungen wie Temperatur, Feuchtigkeit, der Art des verwendeten Herbizids, u.a. variiert die erforderliche Aufwandmenge der Herbizide der Formel (I). Sie kann innerhalb weiter Grenzen variiert werden, z.B. zwischen 0,001 und 10,0 kg/ha oder mehr an Herbizid, vorzugsweise liegt sie zwischen 0,005 und 5 kg/ha.

Folgende Beispiele dienen zur Erläuterung der Erfindung:

### A. Formulierungsbeispiele

a) Ein Staubmittel wird erhalten, indem man 10 Gew.-Teile einer Verbindung der Formel (II) oder eines Wirkstoffgemischs aus einem herbiziden Wirkstoff der Formel (I) und einem Safener der Formel (II) und 90 Gew.-Teile Talkum als lnertstoff mischt und in einer Schlagmühle zerkleinert.
b) Ein in Wasser leicht dispergierbares, benetzbares Pulver wird erhalten, indem man 25 Gewichtsteile einer Verbindung der Formel (II) oder eines Wirkstoffgemischs aus einem herbiziden Wirkstoff der Formel (I) und einem Safener der Formel (II), 64 Gewichtsteile kaolinhaltigen Quarz als Inertstoff, 10 Gewichtsteile ligninsulfonsaures Kalium und 1 Gew.-Teil oleoylmethyltaurinsaures Natrium als Netz- und Dispergiermittel mischt und in einer Stiftmühle mahlt.
c) Ein in Wasser leicht dispergierbares oder suspendierbares Konzentrat wird erhalten, indem man 20 Gewichtsteile einer Verbindung der Formel (II) oder eines Wirkstoffgemischs aus einem herbiziden Wirkstoff der Formel (I) und einem Safener der Formel (II), 6 Gew.-Teilen Alkylphenolpolyglykolether (®Triton X 207), 3 Gew.-Teilen Isotridecanolpolyglykolether (8 EO) und 71 Gew.- Teilen paraffinischem Mineralöl (Siedebereich z.B. ca. 255 bis über 277° C) mischt und in einer Reibkugelmühle auf eine Feinheit von unter 5 Mikron vermahlt.
d) Ein emulgierbares Konzentrat wird erhalten aus 15 Gew.-Teilen einer Verbindung der Formel (II) oder eines Wirkstoffgemischs aus einem herbiziden Wirkstoff der Formel (I) und einem Safener der Formel (II), 75 Gew.Teilen Cyclohexanon als Lösemittel und 10 Gew.-Teilen oxethyliertes Nonylphenol als Emulgator.
e) Ein in Wasser dispergierbares Granulat wird erhalten, indem man

| | |
|---|---|
| 75 Gew.-Teile | einer Verbindung der Formel (II) oder eines Wirkstoffgemischs aus einem herbiziden Wirkstoff der Formel (I) und einem Safener der Formel (II) |
| 10 " | ligninsulfonsaures Calcium, |
| 5 " | Natriumlaurylsulfat, |
| 3 " | Polyvinylalkohol und |
| 7 " | Kaolin |

mischt, auf einer Stiftmühle mahlt und das Pulver in einem Wirbelbett durch Aufsprühen von Wasser als Granulierflüssigkeit granuliert.
f) Ein in Wasser dispergierbares Granulat wird auch erhalten, indem man

| | |
|---|---|
| 25 Gew.-Teil(e) | einer Verbindung der Formel (11) oder eines Wirkstoffgemischs aus einem herbiziden Wirkstoff der Formel (1) und einem Safener der Formel (11) |
| 5 " | 2,2'-dinaphthylmethan-6,6'-disulfonsaures Natrium, |
| 2 " | oleoylmethyltaurinsaures Natrium, |
| 1 " | Polyvinylalkohol, |
| 17 " | Calciumcarbonat und |
| 50 " | Wasser |

auf einer Kolloidmühle homogensiert und vorzerkleinert, anschließend auf einer Perlmühle mahlt und die so erhaltene Suspension in einem Sprühturm mittels einer Einstoffdüse zerstäubt und trocknet.

### B. Biologische Beispiele

### B.1 Vorauflauf, Gewächshaus

Samen von Nutzpflanzen werden in Töpfen von 9 bis 13 cm Durchmesser in sandiger Lehmerde ausgelegt und mit Erde bedeckt. Die als emulgierbare Konzentrate oder Stäubemittel formulierten Herbizide und Safener in Form wäßriger Dispersionen oder Suspensionen bzw. Emulsionen werden mit einer Wasseraufwandmenge von umgerechnet 300 bis 800l/ha in unterschiedlichen Dosierungen auf die Oberfläche der Abdeckerde appliziert. Anschließend werden die Töpfe zur weiteren Kultivierung der Pflanzen im Gewächshaus unter optimalen Bedingungen gehalten. Die optische Bewertung der Schäden an Nutz- und Schadpflanzen erfolgt 3-4 Wochen nach der Behandlung.

Die Versuchsergebnisse sind in Tabelle 3 zusammengestellt. Darin ist die Verringerung der phytotoxischen Wirkung in Prozent der erfindungsgemäßen Herbizid-Safener-Kombinationen gegenüber der alleinigen Herbizid-Anwendung angegeben.

### B.2 Nachauflauf, Gewächshaus

Samen von Nutzpflanzen werden in Töpfen von 9 bis 13 cm Durchmesser in sandiger Lehmerde ausgelegt und mit Erde bedeckt. Im Dreiblattstadium, d.h. etwa drei Wochen nach Beginn der Aufzucht werden die Versuchspflanzen mit den als emulgierbare Konzentrate oder Stäubemittel formulierten Herbizide (Aufwandmenge 200 g Aktivsubstanz pro Hektar) und Safener (Aufwandmenge 100 g Aktivsubstanz pro Hektar) in Form wäßriger Dispersionen oder Suspensionen bzw. Emulsionen behandelt und dabei mit einer Wasseraufwandmenge von umgerechnet 300 bis 800l/ha auf die grünen Pflanzenteile gesprüht. Die Töpfe werden zur weiteren Kultivierung der Pflanzen im Gewächshaus unter optimalen Bedingungen gehalten. Die optische Bewertung der Schäden an Nutz- und Schadpflanzen erfolgt 2-3 Wochen nach der Behandlung.

Die Versuchsergebnisse sind in Tabelle 4 zusammengestellt. Darin ist die Verringerung der phytotoxischen Wirkung in Prozent der erfindungsgemäßen Herbizid-Safener-Kombinationen gegenüber der alleinigen Herbizid-Anwendung angegeben.

### B.3 Vorauflauf, Freiland

Samen von Nutzpflanzen werden in sandiger Lehmerde ausgelegt und mit Erde bedeckt. Die als emulgierbare Konzentrate oder Stäubemittel formulierten Herbizide und Safener in Form wäßriger Dispersionen oder Suspensionen bzw. Emulsionen werden mit einer Wasseraufwandmenge von umgerechnet 300 bis 8001/ha in unterschiedlichen Dosierungen auf die Oberfläche der Abdeckerde appliziert. Die optische Bewertung der Schäden an Nutzpflanzen erfolgt 29 Tage nach der Behandlung.

Die Versuchsergebnisse sind in Tabelle 5 zusammengestellt. Darin ist die Verringerung der phytotoxischen Wirkung in Prozent der erfindungsgemäßen Herbizid-Safener-Kombinationen gegenüber der alleinigen Herbizid-Anwendung angegeben.

### B.4 Saatgutbehandlung, Vorauflauf im Freiland

Saatgut von Mais werden mit unterschiedlichen Mengen eines Safeners behandelt (gebeizt) und anschließend in sandiger Lehmerde ausgelegt und mit Erde bedeckt. Die als emulgierbare Konzentrate oder Stäubemittel formulierten Herbizide werden mit einer Wasseraufwandmenge von umgerechnet 300 bis 8001/ha in unterschiedlichen Dosierungen auf die Oberfläche der Abdeckerde appliziert. Die optische Bewertung der Schäden an Nutzpflanzen erfolgt 41 Tage (Beispiele der Tabelle 6) beziehungsweise 26 Tage (Beispiele der Tabelle 7) nach der Behandlung.

Die Versuchsergebnisse sind in Tabellen 6 und 7 zusammengestellt. Darin ist die Verringerung der phytotoxischen Wirkung in Prozent der erfindungsgemäßen Herbizid-Safener-Kombinationen gegenüber der alleinigen Herbizid-Anwendung angegeben.

In Tabelle 2 sind die verwendeten Herbizide und Safener aufgeführt.

**Tabelle 2**

| | |
|---|---|
| 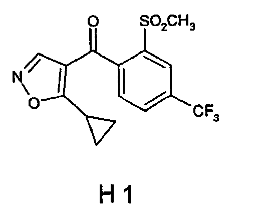 | 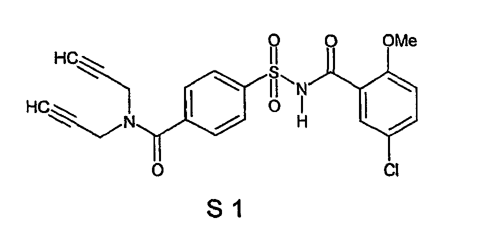 |
| 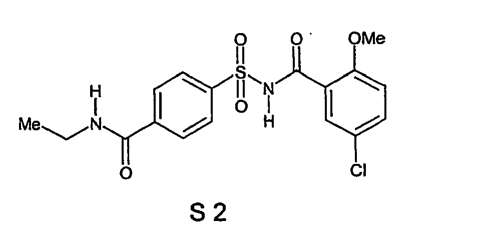 | 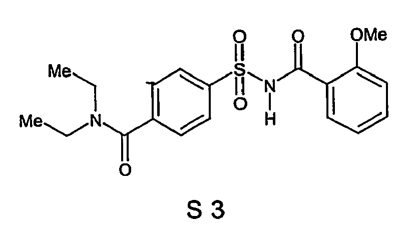 |
| 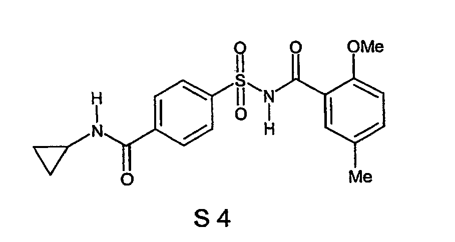 | 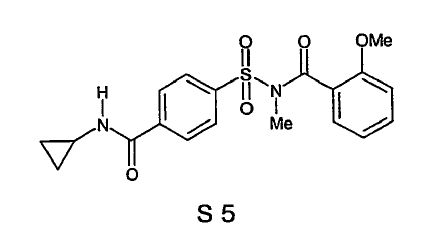 |
| 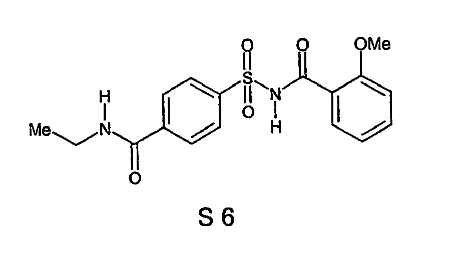 | 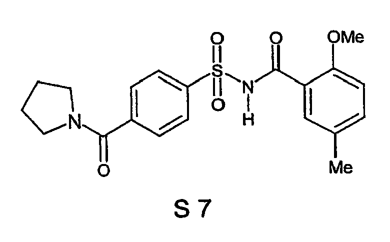 |
| 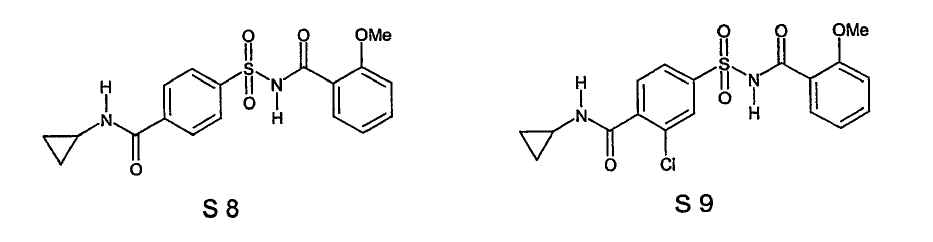 | 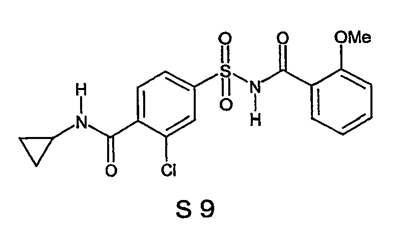 |
| 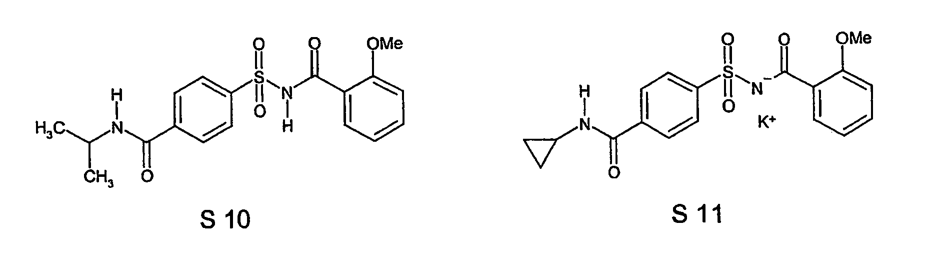 | 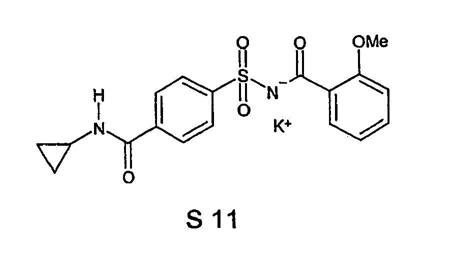 |
| 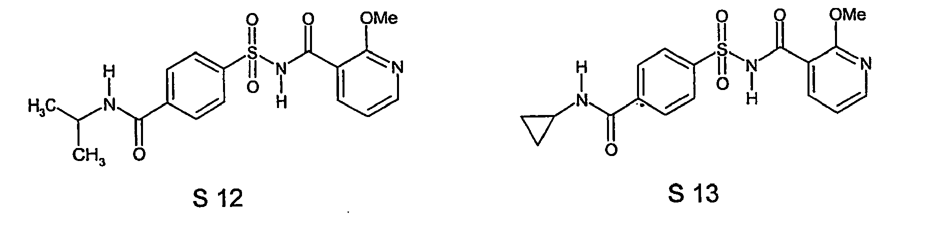 | 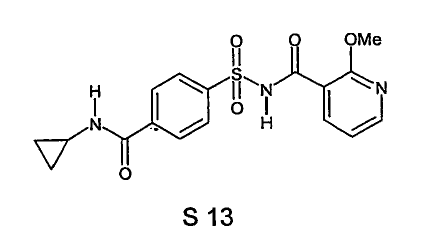 |
| 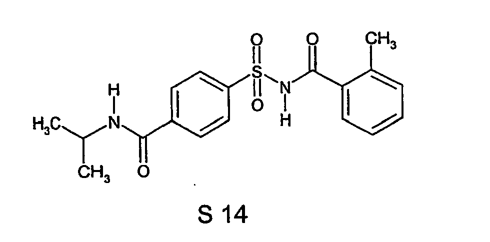 | 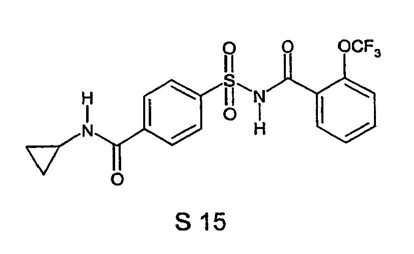 |
| 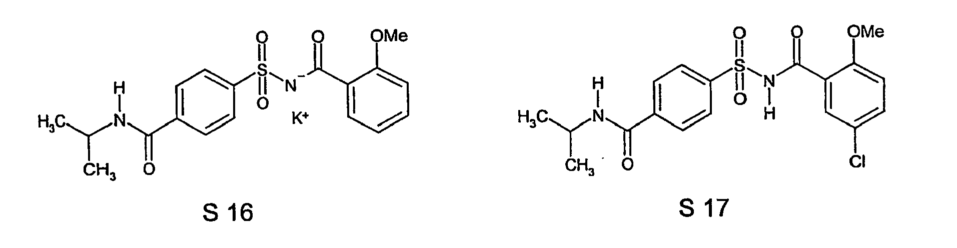 | 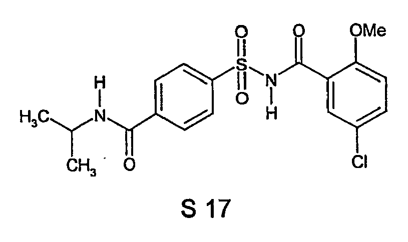 |

**Tabelle 3, Vorauflauf im Gewächshaus**

| **Erfindungsgemäße Kombination** | | **Verringerung der Phytotox** |
|---|---|---|
| **Nr.** | **Herbizid + Safener** | **an Mais um x Prozent** |
| 3.1 | H 1 + S 1 (400g + 200g) | 64 % (Sorte DEA) |
| 3.2 | H 1 + S 2 (400g + 200g) | 73 % (Sorte DEA) |
| 3.3 | H 1 + S 3 (400g + 200g) | 64 % (Sorte DEA) |
| 3.4 | H 1 + S 4 (400g + 200g) | 82 % (Sorte DEA) |
| 3.5 | H 1 + S 8 (400g + 200g) | 76 % (Sorte DEA) |
| 3.6 | H 1 + S 9 (400g + 200g) | 73 % (Sorte DEA) |
| 3.7 | H 1 + S 10 (400g + 200g) | 79 % (Sorte DEA) |
| 3.8 | H1 + S10 (300g + 300g) | 68 % (Sorte Lorenzo) |
| 3.9 | H 1 + S 11 (300g + 300g) | 84 % (Sorte Lorenzo) |
| 3.10 | H 1 + S 12 (300g + 300g) | 56 % (Sorte Lorenzo) |
| 3.11 | H 1 + S 13 (300g + 300g) | 37% (Sorte Lorenzo) |
| 3.12 | H 1 + S 14 (300g + 300g) | 37 % (Sorte Lorenzo) |
| 3.13 | H 1 + S 15 (100g + 100g) | 53 % (Sorte Lorenzo) |
| 3.14 | H 1 + S 16 (100g + 100g) | 77% (Sorte Lorenzo) |
| 3.15 | H 1 + S 17 (80g + 80g) | 58% (Sorte Lorenzo) |

**Tabelle 4, Nachauflauf im Gewächshaus**

| **Erfindungsgemäße Kombination** | | **Verringerung der Phytotox** |
|---|---|---|
| **Nr.** | **Herbizid + Safener** | **an Mais um x Prozent** |
| 4.1 | H 1 + S 1 (200g + 100g) | 50 % (Sorte DEA) |
| 4.2 | H 1 + S 4 (200g+100g) | 50 % (Sorte DEA) |
| 4.3 | H 1 + S 5 (200g + 100g) | 50 % (Sorte DEA) |
| 4.4 | H 1 + S 6 (200g + 100g) | 57% (Sorte DEA) |
| 4.5 | H 1 + S 7 (200g + 100g) | 50 % (Sorte DEA) |
| 4.6 | H 1 + S 8 (200g + 100g) | 67 % (Sorte DEA) |
| 4.7 | H 1 + S 10 (200g + 100g) | 72 % (Sorte DEA) |

**Tabelle 5, Vorauflauf (Herbizid 1, Safener 8) im Freiland**

| **Nr.** | **Aufwandmenge Herbizid [g ai/ha] + Safener [g ai/ha]** | **Verringerung der Phytotox an Mais um x Prozent** |
|---|---|---|
| 5.1 | 75 + 75 | 100 % |
| 5.2 | 150+150 | 64% |
| 5.3 | 300 + 300 | 65% |

**Tabelle 6, Saatgutbehandlung, Vorauflauf (Herbizid 1, Safener 8) im Freiland**

| **Nr.** | **Aufwandmenge Herbizid [g ai/ha] + Safener [glkg Saatgut]** | **Verringerung der Phytotox an Mais um x Prozent** |
|---|---|---|
| 6.1 | 200 +1 | 100 % |
| 6.2 | 200 + 4 | 100 % |

**Tabelle 7, Saatgutbehandlung, Vorauflauf (Herbizid 1, Safener 10) im Freiland**

| **Nr.** | **Aufwandmenge Herbizid [g ai/ha] + Safener [g/kg Saatgut]** | **Verringerung der Phytotox an Mais um x Prozent** |
|---|---|---|
| 7.1 | 200+0.5 | 100% |
| 7.2 | 200 + 1 | 100 % |

## Patentansprüche

1. Herbizid wirksames Mittel, enthaltend eine Mischung aus
A) einer herbizid wirksamen Menge an einer oder mehreren Verbindungen der Formel (1) 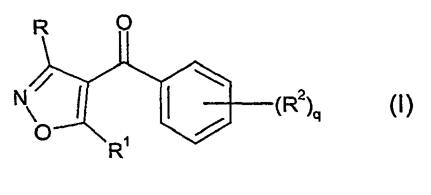 wobei die Symbole und Indizes folgende Bedeutungen haben:
R ist Wasserstoff oder (C₁-C₄)-Alkoxycarbonyl;
R¹ ist Wasserstoff, (C₁-C₄)-Alkyl, (C₂-C₄)-Alkenyl, (C₂-C₄)-Alkinyl, (C₃-C₈)-Cycloalkyl, (C₃-C₈)-Cycloalkenyl, (C₁-C₄)-Alkyl-(C₃-C₈)-cycloalkyl, (C₃-C₇)-Halocycloalkyl, (C₁-C₄)-Alkylthio-(C₃-C₈)-cycloalkyl, (C₁-C₈)-Haloalkyl oder (C₂-C₈)-Haloalkenyl, vorzugsweise (C₃-C₇)-Cycloalkyl, (C₁-C₄)-Alkyl-(C₃-C₇)-cycloalkyl;
R² sind gleich oder verschieden Halogen, Nitro, Cyano, (C₁-C₄)-Alkyl, (C₂-C₄)-Alkenyl, (C₂-C₄)-Alkinyl, (C₁-C₄)-Haloalkyl, (C₂-C₄)-Haloalkenyl, (C₂-C₄)-Haloalkinyl, (C₁-C₄)-Alkoxy-(C₁-C₄)-alkyl, (C₁-C₄)-Alkylthio, (C₁-C₄)-Alkylsulfinyl, (C₁-C₄)-Alkylsulfonyl, (C₁-C₄)-Alkoxy-(C₁-C₄)-alkoxy, (C₁-C₄)-Alkylcarbonyl, (C₁-C₄)-Alkylsulfonylamino, (C₁-C₄)-Alkoxy, (C₁-C₄)-Alkoxycarbonyl, (C₁-C₄)-Alkylaminosulfonyl, (C₁-C₄)-Dialkylaminosulfonyl, (C₁-C₄)-Dialkyl-carbamoyl, (C₁-C₄)-Haloalkylthio, (C₁-C₄)-Alkylsulfonyloxy oder (C₁-C₄)-Haloalkoxy;
q ist 0, 1, 2, 3 oder 4;
und
B) einer antidotisch wirksamen Menge an einem oder mehreren Safenern aus der Gruppe der Acylsulfamoylbenzoesäureamide der Formel (II), gegebenenfalls auch in Salzform, 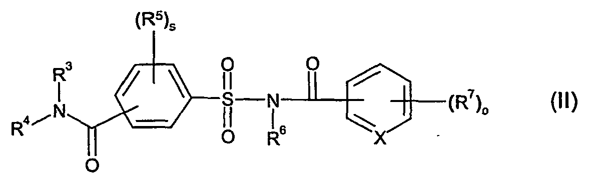 worin
X CH oder N;
R³ Wasserstoff, (C₁-C₆)-Alkyl, (C₃-C₆)-Cycloalkyl, (C₂-C₆)-Alkenyl, (C₂-C₆)-Alkinyl, (C₅-C₆)-Cycloalkenyl, Phenyl oder 3- bis 6-gliedriges Heterocyclyl mit bis zu drei Heteroatomen aus der Gruppe Stickstoff, Sauerstoff und Schwefel, wobei die sieben letztgenannten Reste gegebenenfalls durch einen oder mehrere, gleiche oder verschiedene Substituenten aus der Gruppe Halogen, (C₁-C₆)-Alkoxy, (C₁-C₆)-Haloalkoxy, (C₁-C₂)-Alkylsulfinyl, (C₁-C₂)-Alkylsulfonyl, (C₃-C₆)-Cycloalkyl, (C₁-C₄)-Alkoxycarbonyl, (C₁-C₄)-Alkylcarbonyl und Phenyl und im Falle cyclischer Reste auch (C₁-C₄)-Alkyl und (C₁-C₄)-Haloalkyl substituiert sind;
R⁴ Wasserstoff, (C₁-C₆)-Alkyl , (C₂-C₆)-Alkenyl, (C₂-C₆)-Alkinyl, wobei die drei letztgenannten Reste gegebenenfalls durch einen oder mehrere, gleiche oder verschiedene Substituenten aus der Gruppe Halogen, Hydroxy, (C₁-C₄)-Alkyl, (C₁-C₄)-Alkoxy und (C₁-C₄)-Alkylthio substituiert sind, oder
R³ und R⁴ bilden gemeinsam mit dem dem sie tragenden Stickstoffatom einen Pyrrolidinyl- oder Piperidinyl-Rest;
R⁵ gleich oder verschieden Halogen, (C₁-C₄)-Haloalkyl, (C₁-C₄)-Haloalkoxy, Nitro, (C₁-C₄)-Alkyl, (C₁-C₄)-Alkoxy, (C₁-C₄)-Alkylsulfonyl, (C₁-C₄)-Alkoxycarbonyl oder (C₁-C₄)-Alkylcarbonyl;
R⁶ Wasserstoff, (C₁-C₄)-Alkyl, (C₂-C₄)-Alkenyl oder (C₂-C₄)-Alkinyl;
R⁷ gleich oder verschieden Halogen, Nitro, (C₁-C₄)-Alkyl, (C₁-C₄)-Haloalkyl, (C₁-C₄)-Haloalkoxy, (C₃-C₆)-Cycloalkyl, Phenyl, (C₁-C₄)-Alkoxy, Cyano, (C₁-C₄)-Alkylthio, (C₁-C₄)-Alkylsulfinyl, (C₁-C₄)-Alkylsulfonyl, (C₁-C₄)-Alkoxycarbonyl oder (C₁-C₄)-Alkyldarbonyl;
s 0, 1 oder 2 und
o 1 oder 2
bedeuten, einschließlich der Stereoisomeren und der in der Landwirtschaft gebräuchlichen Salze.

2. Herbizid wirksames Mittel nach Anspruch 1, worin in Verbindungen der der Formel (I) die Symbole und Indizes folgende Bedeutungen haben:
R ist Wasserstoff oder Ethoxycarbonyl;
R¹ ist Cyclopropyl, und
R² sind gleich oder verschieden Halogen, Methyl, Ethyl, Trifluormethyl, Methylthio, Ethylthio, Methylsulfonyl, Ethylsulfonyl, Methoxy, Ethoxy, Halogenmethoxy oder Halogenethoxy.

3. Herbizid wirksames Mittel nach Anspruch 1 oder 2, worin in Verbindungen der Formel (1) die Symbole und Indizes folgende Bedeutungen haben:
R² sind gleich oder verschieden Chlor, Brom, Fluor, Methyl, Ethyl, Trifluormethyl, Methylsulfonyl, Ethylsulfonyl, Methoxy oder Ethoxy;
q ist 2 oder 3.

4. Herbizid wirksames Mittel nach einem der Ansprüche 1 bis 3, worin in Verbindungen der Formel (1) ein R² für einen 2-Methylsulfonyl- und ein weiteres R² für einen 4-Trifluormethyl-, 4-Chlor- oder 4-Brom-Rest steht.

5. Herbizid wirksames Mittel nach einem der Ansprüche 1 bis 4, worin in Verbindungen der Formel (II) die Symbole folgende Bedeutungen haben:
X bedeutet CH;
R³ ist Wasserstoff, (C₁-C₆)-Alkyl, (C₃-C₆)-Cycloalkyl, (C₂-C₆)-Alkenyl, (C₅-C₆)-Cycloalkenyl oder Phenyl;
R⁶ ist Wasserstoff;
R⁷ ist gleich oder verschieden Halogen, Nitro, (C₁-C₄)-Alkyl, (C₁-C₄)-Haloalkyl, (C₁-C₄)-Haloalkoxy, (C₃-C₆)-Cycloalkyl, (C₁-C₄)-Alkoxy, Cyano, (C₁-C₄)-Alkylthio, (C₁-C₄)-Alkylsulfinyl, (C₁-C₄)-Alkylsulfonyl, (C₁-C₄)-Alkoxycarbonyl oder (C₁-C₄)-Alkylcarbonyl.

6. Herbizid wirksames Mittel nach einem der Ansprüche 1 bis 5, worin in Verbindungen der Formel (II) die Symbole und Indizes folgende Bedeutungen haben:
R³ ist (C₂-C₆)-Alkinyl oder
R³ und R⁴ bilden gemeinsam mit dem dem sie tragenden Stickstoffatom einen Pyrrolidinyl- oder Piperidinyl-Rest, und
R⁶ ist Methyl.

7. Herbizid wirksames Mittel nach einem der Ansprüche 1 bis 6, worin in Formel (II) die Gruppe "R³R⁴N-CO-" sich in 4- Position am Phenylring befindet.

8. Herbizid wirksames Mittel gemäß einem oder mehreren der Ansprüche 1 bis 7, worin das Gewichtsverhältnis Herbizid:Safener 1:100 bis 100:1 beträgt.

9. Herbizid wirksames Mittel gemäß einem oder mehreren der Ansprüche 1 bis 8, zusätzlich ein weiteres Herbizid enthaltend.

10. Herbizid wirksames Mittel gemäß Anspruch 9, worin das weitere Herbizid ein Sulfonylharnstoff ist.

11. Verfahren zur Bekämpfung von Schadpflanzen in Nutzpflanzenkulturen, **dadurch gekennzeichnet, daß** eine herbizid wirksame Menge eines herbizid wirksamen Mittels gemäß einem oder mehreren der Ansprüche 1 bis 9 auf die Schadpflanzen, Kulturpflanzen, Pflanzensamen oder die Fläche, auf der die Pflanzen wachsen, aufgebracht wird.

12. Verfahren nach Anspruch 11, **dadurch gekennzeichnet, daß** Safener und Herbizid zeitlich versetzt aufgebracht werden.

13. Verfahren nach Anspruch 11 oder 12, **dadurch gekennzeichnet, daß** in einem Vorbehandlungsschritt das Saatgut mit einem Safener gebeizt wird und in einem weiteren Schritt das Herbizid aufgebracht wird.

14. Verfahren gemäß einem oder mehreren Ansprüchen 11 bis 13, **dadurch gekennzeichnet, daß** die Pflanzen aus der Gruppe Mais, Weizen, Roggen, Gerste, Hafer, Reis, Sorghum, Baumwolle und Soja stammen.

15. Verfahren gemäß einem oder mehreren Ansprüchen 11 bis 14, **dadurch gekennzeichnet, daß** die Pflanzen gentechnisch verändert sind.

16. Verwendung eines herbizid wirksamen Mittels gemäß einem oder mehreren der Ansprüche 1 bis 10, zur Bekämpfung von Schadpflanzen in Nutzpflanzenkulturen.

## Claims

1. A herbicidally active composition, comprising a mixture of
A) a herbicidally effective amount of one or more compounds of the formula (I) 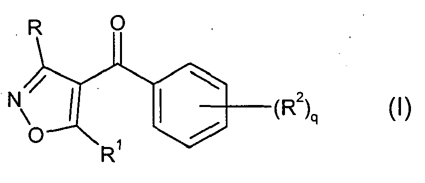 where the symbols and indices are as defined below:
R is hydrogen or (C₁-C₄)-alkoxycarbonyl;
R¹ is hydrogen, (C₁-C₄)-alkyl, (C₂-C₄)-alkenyl, (C₂-C₄)-alkynyl, (C₃-C₈)-cydoalkyl, (C₃-C₈)-cycloalkenyl, (C₁-C₄)-alkyl-(C₃-C₈)-cycloalkyl, (C₃-C₇)-halocycloalkyl, (C₁-C₄)-alkylthio-(C₃-C₈)-cycloalkyl, (C₁-C₈)-haloalkyl or (C₂-C₈)-haloalkenyl, preferably (C₃-C₇)-cycloalkyl, (C₁-C₄)-alkyl-(C₃-C₇)-cycloalkyl;
R² are identical or different radicals from the group consisting of halogen, nitro, cyano, (C₁-C₄)-alkyl, (C₂-C₄)-alkenyl, (C₂-C₄)-alkynyl, (C₁-C₄)-haloalkyl, (C₂-C₄)-haloalkenyl, (C₂-C₄)-haloalkynyl, (C₁-C₄)-alkoxy-(C₁-C₄)-alkyl, (C₁-C₄)-alkylthio, (C₁-C₄)-alkylsulfinyl, (C₁-C₄)-alkylsulfonyl, (C₁-C₄)-alkoxy-(C₁-C₄)-alkoxy, (C₁-C₄)-alkylcarbonyl, (C₁-C₄)-alkylsulfonylamino, (C₁-C₄)-alkoxy, (C₁-C₄)-alkoxycarbonyl, (C₁-C₄)-alkylaminosulfonyl, (C₁-C₄)-dialkylaminosulfonyl, (C₁-C₄)-dialkylcarbamoyl, (C₁-C₄)-haloalkylthio, (C₁-C₄)-alkylsulfonyloxy and (C₁-C₄)-haloalkoxy;
q is 0, 1, 2, 3 or 4;
and
B) an antidotically effective amount of one or more safeners from the group of the acylsulfamoylbenzamides of the formula (II), if appropriate also in the form of a salt, 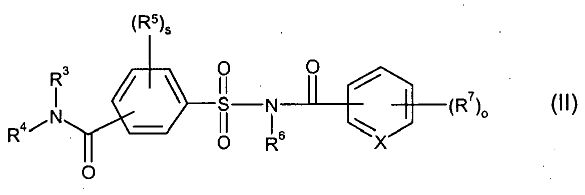 in which
X is CH or N;
R³ is hydrogen, (C₁-C₆)-alkyl, (C₃-C₆)-cycloalkyl, (C₂-C₆)-alkenyl, (C₂-C₆)-alkynyl, (C₅-C₆)-cycloalkenyl, phenyl or 3- to 6-membered heterocyclyl having up to three heteroatoms from the group consisting of nitrogen, oxygen and sulfur, where the seven last mentioned radicals are unsubstituted or substituted by one or more identical or different substituents from the group consisting of halogen, (C₁-C₆)-alkoxy, (C₁-C₆)-haloalkoxy, (C₁-C₂)-alkylsulfinyl, (C₁-C₂)-alkylsulfonyl, (C₃-C₆)-cycloalkyl, (C₁-C₄)-alkoxycarbonyl, (C₁-C₄)-alkylcarbonyl and phenyl and, in the case of cyclic radicals, also (C₁-C₄)-alkyl and (C₁-C₄)-haloalkyl;
R⁴ is hydrogen, (C₁-C₆)-alkyl, (C₂-C₆)-alkenyl, (C₂-C₆)-alkynyl, where the three last mentioned radicals are unsubstituted or substituted by one or more identical or different substituents from the group consisting of halogen, hydroxyl, (C₁-C₄)-alkyl, (C₁-C₄)-alkoxy and (C₁-C₄)-alkylthio, or
R³ and R⁴ together with the nitrogen atom that carries them form a pyrrolidinyl or piperidinyl radical;
R⁵ are identical or different radicals from the group consisting of halogen, (C₁-C₄)-haloalkyl, (C₁-C₄)-haloalkoxy, nitro, (C₁-C₄)-alkyl, (C₁-C₄)-alkoxy, (C₁-C₄)-alkylsulfonyl, (C₁-C₄)-alkoxycarbonyl and (C₁-C₄)-alkylcarbonyl;
R⁶ is hydrogen, (C₁-C₄)-alkyl, (C₂-C₄)-alkenyl or (C₂-C₄)-alkynyl;
R⁷ are identical or different radicals from the group consisting of halogen, nitro, (C₁-C₄)-alkyl, (C₁-C₄)-haloalkyl, (C₁-C₄)-haloalkoxy, (C₃-C₆)-cycloalkyl, phenyl, (C₁-C₄)-alkoxy, cyano, (C₁-C₄)-alkylthio, (C₁-C₄)-alkylsulfinyl, (C₁-C₄)-alkylsulfonyl, (C₁-C₄)-alkoxycarbonyl or (C₁-C₄)-alkylcarbonyl;
s is 0, 1 or 2 and
o is 1 or 2,
including the stereoisomers and the salts customarily used in agriculture.

2. A herbicidally active composition as claimed in claim 1, where in compounds of the formula (I) the symbols and indices are as defined below:
R is hydrogen or ethoxycarbonyl;
R¹ is cyclopropyl and
R² are identical or different radicals from the group consisting of halogen, methyl, ethyl, trifluoromethyl, methylthio, ethylthio, methylsulfonyl, ethylsulfonyl, methoxy, ethoxy, halomethoxy and haloethoxy.

3. A herbicidally active composition as claimed in claim 1 or 2, where in compounds of the formula (I) the symbols and indices are as defined below:
R² are identical or different radicals from the group consisting of chlorine, bromine, fluorine, methyl, ethyl, trifluoromethyl, methylsulfonyl, ethylsulfonyl, methoxy and ethoxy;
q is 2 or 3.

4. A herbicidally active composition as claimed in any of claims 1 to 3, where in compounds of the formula (I) one R² is a 2-methylsulfonyl radical and a further R² is a 4-trifluoromethyl, 4-chloro or 4-bromo radical.

5. A herbicidally active composition as claimed in any of claims 1 to 4, where in compounds of the formula (II) the symbols are as defined below:
X is CH;
R³ is hydrogen, (C₁-C₆)-alkyl, (C₃-C₆)-cycloalkyl, (C₂-C₆)-alkenyl, (C₅-C₆)-cycloalkenyl or phenyl;
R⁶ is hydrogen;
R⁷ are identical or different radicals from the group consisting of halogen, nitro, (C₁-C₄)-alkyl, (C₁-C₄)-haloalkyl, (C₁-C₄)-haloalkoxy, (C₃-C₆)-cycloalkyl, (C₁-C₄)-alkoxy, cyano, (C₁-C₄)-alkylthio, (C₁-C₄)-alkylsulfinyl, (C₁-C₄)-alkylsulfonyl, (C₁-C₄)-alkoxycarbonyl and (C₁-C₄)-alkylcarbonyl.

6. A herbicidally active composition as claimed in any of claims 1 to 5, where in compounds of the formula (II) the symbols and indices are as defined below:
R³ is (C₂-C₆)-alkynyl or
R³ and R⁴ together with the nitrogen atom that carries them form a pyrrolidinyl or piperidinyl radical and
R⁶ is methyl.

7. A herbicidally active composition as claimed in any of claims 1 to 6, where in the formula (II) the group "R³R⁴N-CO-" is located in the 4-position on the phenyl ring.

8. A herbicidally active composition as claimed in one or more of claims 1 to 7, where the weight ratio herbicide:safener is from 1:100 to 100:1.

9. A herbicidally active composition as claimed in one or more of claims 1 to 8, additionally comprising a further herbicide.

10. A herbicidally active composition as claimed in claim 9, where the further herbicide is a sulfonylurea.

11. A method for controlling harmful plants in crops of useful plants, which comprises applying a herbicidally effective amount of a herbicidally active composition as claimed in one or more of claims 1 to 9 to the harmful plants, crop plants, plant seeds or the area in which the plants grow.

12. A method as claimed in claim 11, wherein safener and herbicide are applied at different times.

13. A method as claimed in claim 11 or 12, wherein, in a pretreatment step, the seeds are dressed with a safener and, in a further step, the herbicide is applied.

14. A method as claimed in one or more of claims 11 to 13, wherein the plants are from the group consisting of corn, wheat, rye, barley, oats, rice, sorghum, cotton and soybean.

15. A process as claimed in one or more of claims 11 to 14, wherein the plants are genetically modified.

16. The use of a herbicidally active composition as claimed in one or more of claims 1 to 10 for controlling harmful plants in crops of useful plants.

## Revendications

1. Agent à efficacité herbicide contenant un mélange de
A) une quantité à efficacité herbicide d'un ou plusieurs composés de formule (I) 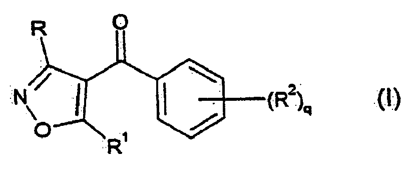 les symboles et les indices possédant les significations suivantes :
R représente un atome d'hydrogène ou un groupe (alkoxy en C₁-C₄) carbonyle ;
R¹ représente un atome d'hydrogène, un groupe alkyle en C₁-C₄, alcényle en C₂-C₄, alcynyle en C₂-C₄, cycloalkyle en C₃-C₈, cycloalcényle en C₃-C₈, (alkyl en C₁-C₄) -cycloalkyle en C₃-C₈, halocycloalkyle en C₃-C₇, (alkyl en C₁-C₄) thio-cycloalkyle en C₃-C₈, haloalkyle en C₁-C₈ ou haloalcényle en C₂-C₈, de préférence cycloalkyle en C₃-C₇, (alkyl en C₁-C₄)-cycloalkyle en C₃-C₇;
R² identiques ou différents, représentent un atome d'halogène, un groupe nitro, cyano, alkyle en C₁-C₄, alcényle en C₂-C₄, alcynyle en C₂-C₄, haloalkyle en C₁-C₄, haloalcényle en C₂-C₄, haloalcynyle en C₂-C₄, (alkoxy en C₁-C₄)-alkyle en C₁-C₄, (alkyl en C₁-C₄)thio, (alkyl en C₁-C₄)sulfinyle, (alkyl en C₁-C₄)sulfonyle, (alkoxy en C₁-C₄)-alkoxy en C₁-C₄, (alkyl en C₁-C₄)carbonyle, (alkyl en C₁-C₄)sulfonylamino, alkoxy en C₁-C₄, (alkoxy en C₁-C₄)carbonyle, (alkyl en C₁-C₄)aminosulfonyle, di(alkyl en C₁-C₄)aminosulfonyle, di (alkyl en C₁-C₄) carbamoyle, halo (alkyl en C₁-C₄)-thio, (alkyl en C₁-C₄) sulfonyloxy ou haloalkoxy en C₁-C₄ ;
q vaut 0, 1, 2, 3 ou 4 ;
et
B) d'une quantité à efficacité antidotique d'un ou plusieurs safeners pris dans le groupe des amides de l'acide acylsulfamoylbenzoïque de formule (II) éventuellement aussi sous forme salifiée 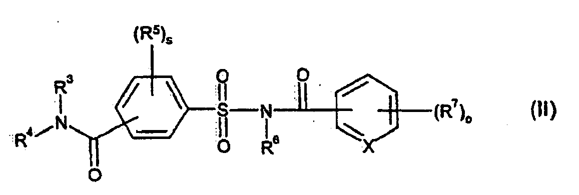 où
X représente un groupe CH ou N ;
R³ représente un atome d'hydrogène, un groupe alkyle en C₁-C₆, cycloalkyle en C₃-C₆, alcényle en C₂-C₆, alcynyle en C₂-C₆, cycloalcényle en C₅-C₆, phényle ou hétérocyclyle de 3 à 6 chaînons ayant jusqu'à 3 hétéroatomes pris dans le groupe constitué par les atomes d'azote, d'oxygène et de soufre, les sept derniers restes cités étant éventuellement substitués par un ou plusieurs substituants identiques ou différents pris dans le groupe constitué par des halogène, alkoxy en C₁-C₆, haloalkoxy en C₁-C₆, (alkyl en C₁-C₂) sulfinyle, (alkyl en C₁-C₂) sulfonyle, cycloalkyle en C₃-C₆, (alkoxy, en C₁-C₄) carbonyle, (alkyl en C₁-C₄)-carbonyle et phényle et dans le cas de radicaux cycliques aussi alkyle en C₁-C₄ et haloalkyle en C₁-C₄ ;
R⁴ représente un atome d'hydrogène, un groupe alkyle en C₁-C₆, alcényle en C₂-C₆, alcynyle en C₂-C₆, les trois derniers restes cités étant éventuellement substitués par un ou plusieurs substituants identiques ou différents pris dans le groupe constitué par les halogène, hydroxy, alkyle en C₁-C₄, alkoxy en C₁-C₄ et (alkyl en C₁-C₄) thio, ou
R³ et R⁴ conjointement avec l'atome d'azote qui les porte, forment un reste pyrrolidinyle ou pipéridinyle ;
R⁵ identiques ou différents, représentent un atome d'halogène, un groupe haloalkyle en C₁-C₄, haloalkoxy en C₁-C₄, nitro, alkyle en C₁-C₄, alkoxy en C₁-C₄, (alkyl en C₁-C₄)sulfonyle, (alkoxy en C₁-C₄)-carbonyle ou (alkyl en C₁-C₄) carbonyle ;
R⁶ représente un atome d'hydrogène, un groupe alkyle en C₁-C₄, alcényle en C₂-C₄ ou alcynyle en C₂-C₄ ;
R⁷ identiques ou différents, représentent un atome d'halogène, un groupe nitro, alkyle en C₁-C₄, haloalkyle en C₁-C₄, haloalkoxy en C₁-C₄, cycloalkyle en C₃-C₆, phényle, alkoxy en C₁-C₄, cyano, (alkyl en C₁-C₄) thio, (alkyl en C₁-C₄)sulfinyle, (alkyl en C₁-C₄) sulfonyle, (alkoxy en C₁-C₄)carbonyle ou (alkyl en C₁-C₄) carbonyle ;
s vaut 0, 1 ou 2 et
o 1 ou 2,
y compris les stéréoisomères et les sels utilisables en agriculture.

2. Agent à efficacité herbicide selon la revendication 1, où dans les composés de formule (I), les symboles et les indices ont les significations suivantes :
R représente un atome d'hydrogène ou un groupe éthoxycarbonyle;
R¹ représente un groupe cyclopropyle, et
R² identiques ou différents, représentent un atome d'halogène, un groupe méthyle, éthyle, trifluoro-méthyle, méthylthio, éthylthio, méthylsulfonyle, éthylsulfonyle, méthoxy, éthoxy, halogénométhoxy ou halogénoéthoxy.

3. Agent à efficacité herbicide selon la revendication 1 ou 2, où dans les composés de formule (I), les symboles et les indices ont les significations suivantes :
R² identiques ou différents, représentent un atome de chlore, de brome, de fluor, un groupe méthyle, éthyle, trifluorométhyle, méthylsulfonyle, éthylsulfonyle, méthoxy ou éthoxy ;
q vaut 2 ou 3.

4. Agent à efficacité herbicide selon l'une des revendications 1 à 3, où dans les composés de formule (I) un R² représente un radical 2-méthylsulfonyle et un autre R² représente un radical 4-trifluorméthyle, 4-chloro ou 4-bromo.

5. Agent à efficacité herbicide selon l'une des revendications l à 4, où dans les composés de formule (II), les symboles ont les significations suivantes :
X représente un groupe CH ;
R³ représente un atome d'hydrogène, un groupe alkyle en C₁-C₆, cycloalkyle en C₃-C₆, alcényle en C₂-C₆, cycloalcényle en C₅-C₆ ou phényle ;
R⁶ représente un atome d'hydrogène ;
R⁷ identiques ou différents, représentent un atome d'halogène, un groupe nitro, alkyle en C₁-C₄, haloalkyle en C₁-C₄, haloalkoxy en C₁-C₄, cycloalkyle en C₃-C₆, alkoxy en C₁-C₄, cyano, (alkyl en C₁-C₄) thio, (alkyl en C₁-C₄) sulfinyle, (alkyl en C₁-C₄) sulfonyle, (alkoxy en C₁-C₄)carbonyle ou (alkyl en C₁-C₄)carbonyle.

6. Agent à efficacité herbicide selon l'une des revendications 1 à 5, où dans les composés de formule (II), les symboles et les indices ont des significations suivantes :
R³ représente un groupe alcynyle en C₂-C₆ ou
R³ et R⁴ conjointement avec l'atome d'azote qui les porte, forment un radical pyrrolidinyle ou pipéridinyle et
R⁶ représente un groupe méthyle.

7. Agent à efficacité herbicide selon l'une des revendications 1 à 6, où dans la formule (II) le groupe "R³R⁴N-CO-" se trouve en position 4 du cycle phényle.

8. Agent à efficacité herbicide selon l'une des revendications 1 à 7, dans lequel le rapport en masse herbicide:safener est de 1:100 à 100:1.

9. Agent à efficacité herbicide selon l'une des revendications 1 à 8, contenant de plus un autre herbicide.

10. Agent à efficacité herbicide selon la revendication 9, dans lequel l'autre herbicide est une sulfonylurée.

11. Procédé pour la lutte contre les plantes adventices dans les cultures de plantes utiles **caractérisé en ce qu'**on applique une quantité à efficacité herbicide d'un agent à efficacité herbicide selon une ou plusieurs des revendications 1 à 9 aux plantes adventices, aux plantes de culture, à la semence des plantes ou à la surface où poussent les plantes.

12. Procédé selon la revendication 11, **caractérisé en ce que** le safener et l'herbicide sont appliqués avec un décalage dans le temps.

13. Procédé selon la revendication 11 ou 12, **caractérisé en ce que**, dans une étape de pré-traitement, la semence est stérilisée par un safener et, dans une autre étape, l'herbicide est appliqué.

14. Procédé selon une ou plusieurs des revendications 11 à 13, **caractérisé en ce que** les plantes proviennent du groupe constitué par le maïs, le blé, le seigle, l'orge, l'avoine, le riz, le sorgho, le coton et le soja.

15. Procédé selon une ou plusieurs des revendications 11 à 14, **caractérisé en ce que** les plantes sont génétiquement modifiées.

16. Utilisation d'un agent à efficacité herbicide selon une ou plusieurs des revendications 1 à 10, pour la lutte contre les plantes adventices dans les cultures de plantes utiles.
